(19) Europäisches Patentamt
European Patent Office
Office européen des brevets

(11) **EP 4 411 453 A1**

(12) **EUROPEAN PATENT APPLICATION**

(43) Date of publication:
**07.08.2024 Bulletin 2024/32**

(51) International Patent Classification (IPC):
**G02B 27/01** (2006.01)   **G02B 27/28** (2006.01)

(21) Application number: **24154362.8**

(52) Cooperative Patent Classification (CPC):
**G02B 27/0172;** G02B 27/286; G02B 2027/012;
G02B 2027/0125

(22) Date of filing: **29.01.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023  JP 2023014985
09.11.2023  JP 2023191350**

(71) Applicant: **Ricoh Company, Ltd.
Tokyo 143-8555 (JP)**

(72) Inventors:
• **SUDOH, Yoshifumi
Tokyo, 143-855 (JP)**
• **TSUTSUI, Takemasa
Tokyo, 143-855 (JP)**

(74) Representative: **J A Kemp LLP
80 Turnmill Street
London EC1M 5QU (GB)**

(54) **OPTICAL SYSTEM, VIRTUAL IMAGE DISPLAY DEVICE, AND HEAD-MOUNTED DISPLAY**

(57) An optical system includes a light guide (30), a partial reflector (320), and a polarizer (70). The light guide (30) has a light-emission surface (340); and an outer surface (350) opposite to the light-emission surface (340). The polarizer (70) on the outer surface (350) transmits a part of incident light incident on the polarizer (70). The polarizer (70) has a first transmittance in a first polarization direction higher than a second transmittance in a second polarization direction orthogonal to the first polarization direction, with respect to vertical incident light incident perpendicularly on the polarizer. The partial reflector (320) has a first reflectance in the first polarization direction lower than a second reflectance in the second polarization direction, with respect to the vertical incident light.

## FIG. 2

**Description**

BACKGROUND

Technical Field

Embodiments of the present disclosure relate to an optical system, a virtual image display device, and a head-mounted display.

Related Art

Virtual image display devices have been developed for displaying an enlarged two-dimensional virtual image to be observed by an observer. For example, Japanese Unexamined Patent Application Publication No. 2006-162767 has a detailed description of the specific configuration of this type of virtual image display device.

The virtual image display device described in Japanese Unexamined Patent Application Publication No. 2006-162767 is a glasses-type device. This device guides light, which is referred to as image light or light containing image information, emitted from each pixel of the image display element, through the glasses lens. This image light is then projected toward an observer, allowing the observer to perceive the image light as a virtual image.

The virtual image display device described in Japanese Patent No. 2006-162767 includes a dimming film formed on the surface of the glass lens. The dimming film on the glass lens reduces external light entering the lens, reducing, for example, ghosting or flaring that occurs in bright external conditions.

In the virtual image display devices, for example, such a type of ghosting or flaring is to be effectively prevented or reduced. In view of the above circumstances, it is an object of the disclosed technology to provide an optical system for virtual image display devices, which prevents or reduces, for example, ghosting or flaring that occurs in bright external conditions; a virtual display device incorporating the optical system; and a head-mounted display incorporating the optical system.

SUMMARY

In view of the above circumstances, an embodiment of the present disclosure provides an optical system including a light guide, a partial reflector, and a polarizer. The light guide guides image light emitted from an image display element that displays an image. The light guide has a light-emission surface; and an outer surface opposite to the light-emission surface. The partial reflector in the light guide reflects a part of the image light guided in the light guide to an outside of the light guide through the light-emission surface. The polarizer is on the outer surface of the light guide to transmit a part of incident light incident on the polarizer. The polarizer has a first transmittance in a first polarization direction higher than a second transmittance in a second polarization direction orthogonal to the first polarization direction, with respect to vertical incident light incident perpendicularly on the polarizer. The partial reflector has a first reflectance in the first polarization direction lower than a second reflectance in the second polarization direction, with respect to the vertical incident light.

An embodiment of the present disclosure provides a virtual image display device including the image display element and the virtual image display device described above.

An embodiment of the present disclosure provides a head-mounted display including the virtual image display device.

According to one aspect of the present disclosure, an optical system for virtual image display devices, a virtual image display device incorporating the optical system, and a head-mounted display incorporating the optical system, which effectively prevent or reduce, for example, ghosting or flaring.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a diagram of a head-mounted display that serves as a virtual image display device according to an embodiment of the present disclosure;
FIG. 2 is a diagram of a virtual image display device according to an embodiment of the present disclosure;
FIG. 3 is a diagram of a virtual image display device according to another embodiment of the present disclosure;
FIG. 4A is a diagram illustrating the optical configuration of the virtual image display device according to Numerical Examples 1 to 4 of the present disclosure;
FIG. 4B is another diagram illustrating the optical configuration of a virtual image display device according to Numerical Examples 1 to 4;
FIG. 5 is a diagram of the illuminance distribution of image light according to Numerical Example 1;
FIG. 6 is a graph of the light-shielding ratio of a virtual image display device according to Numerical Example 1;
FIG. 7 is a diagram of the illuminance distribution of image light according to Numerical Example 2;
FIG. 8 is a graph of the light-shielding ratio of a virtual image display device according to Numerical Example 2;
FIG. 9 is a diagram of the illuminance distribution of image light according to Numerical Example 3;
FIG. 10 is a graph of the light-shielding ratio of a virtual image display device according to Numerical Example 3;
FIG. 11 is a diagram of the illuminance distribution of image light according to Numerical Example 4;
FIG. 12 is a graph of the light-shielding ratio of a virtual image display device according to Numerical Example 4; and
FIG. 13 is a diagram of an optical path of light that causes ghosting or flaring according to an embodiment of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

In the virtual image display devices, for example, such a type of ghosting or flaring is to be effectively prevented or reduced. In view of the above circumstances, it is an object of the disclosed technology to provide an optical system for virtual image display devices, which prevents or reduces, for example, ghosting or flaring that occurs in bright external conditions; a virtual display device incorporating the optical system; and a head-mounted display incorporating the optical system.

An optical system for a virtual image display device according to an embodiment, a virtual image display device, and a head-mounted display are described below with reference to the drawings. In the drawings, like reference signs denote like elements, and overlapping description may be simplified or omitted as appropriate.

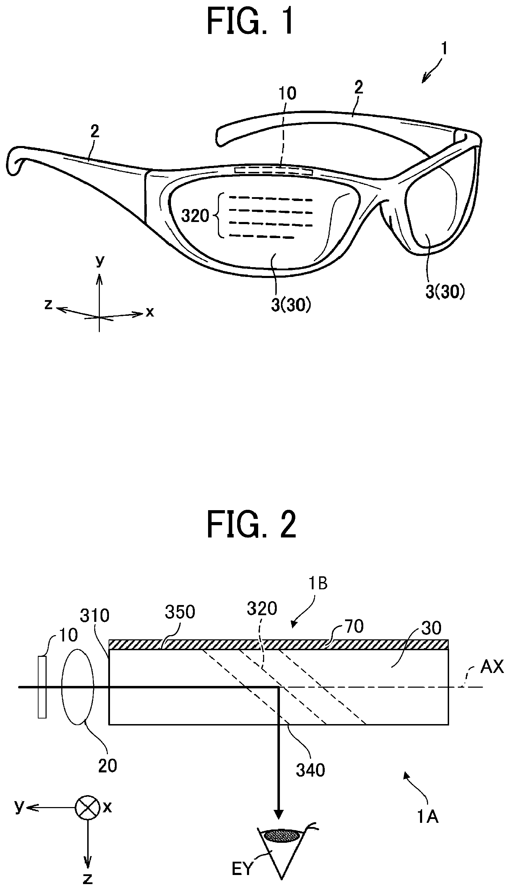

FIG. 1 is a diagram of a head-mounted display 1 that serves as a virtual image display device according to an embodiment of the present disclosure. In addition, the head-mounted display 1 includes a virtual image display device that can be mounted on the head of the wearer. In the present embodiment, a head-mounted display 1 is, for example, smart glasses that serve as a glasses-type wearable terminal. The smart glasses may be referred to as a glass device or a glass display.

Examples of the head-mounted display 1 include virtual reality (VR) glasses, augmented reality (AR) Glasses, mixed reality (MR) Glasses, and extended reality (XR) glasses, which are all wearable terminals.

In FIG. 1, the head-mounted display 1 is a binocular head-mounted display. A head-mounted display 1 according to another embodiment of the present disclosure may be a monocular head-mounted display corresponding to one of the left and right eyes.

As illustrated in FIG. 1, the head-mounted display 1 includes a frame portion 2 and a lens portion 3. The lens portion 3 is fitted into the frame portion 2. A pair of lens portions 3 is disposed corresponding to the left and right eyes of the wearer.

In the head-mounted display 1, an image display element 10 for displaying an image is built in the frame portion 2. In FIG. 1, the image display element 10 is embedded in a portion of the frame portion 2 covering the upper edge of the lens portion 3. The installation position of the image display element 10 is not limited to the position illustrated in FIG. 1. Alternatively, the image display element 10 may be embedded in a portion of the frame portion 2 covering the lower edge or right-side edge of the lens portion 3.

The image display element 10 displays an image to be perceived as a virtual image by the wearer wearing the head-mounted display 1. Examples of the image display element 10 include an organic light-emitting diode (OLED) array, a laser diode (LD) array, a light-emitting diode (LED) array, micro-electro-mechanical systems (MEMS), and a digital micromirror device (DMD).

In the following description, a z-direction in FIG. 1 is referred to as a first horizontal direction from the lens portion 3 to the eyes of the wearer (or a user), an x-direction in FIG. 1 is referred to as a second horizontal direction orthogonal to the z-direction, and a y-direction in FIG. 1 is referred to as a vertical direction orthogonal to each of the x-direction and the z-direction. The x-direction, the y-direction, and the z-direction orthogonal to each other form a left-handed system.

The term "direction" is used for convenience to describe the relative position between the components, and does not indicate an absolute direction. Depending on the posture of the user wearing the head-mounted display 1, for example, the z-direction may not be the horizontal direction and may be the vertical direction.

Light rays (i.e., image light) emitted from the respective pixels of the image display element 10 are emitted from the image display element 10 in the -y-direction to enter the lens portion 3 and proceed through the lens portion 3. The light rays are then emitted from the lens portion 3 in the +z-direction (i.e., to the eyes of the wearer) for the display of a virtual image. In other words, the left and right lens portions 3 as a pair each form an eye box in a region encompassing the corresponding eye.

FIG. 2 is a schematic diagram of a virtual image display device 1A according to an embodiment of the present disclosure. More specifically, FIG. 2 is a schematic diagram of the image display element 10, a propagation optical system 20, and a yz cross section of an optical system 1B for a virtual image display device is referred to simply as the optical system 1B in the following description, and such a cross section of the optical system 1B includes an optical axis AX of the image display element 10 thereon.

In the present embodiment, the optical axis AX is defined as an optical path of light proceeding from the center of the effective pixel area of the image display element 10 in a direction perpendicular to the pixel array surface. The optical axis AX is also an optical axis of the virtual image display device 1A and is also an optical axis of each of the optical components (for example, a light guide 30 to be described later) included in the optical system 1B.

In some embodiments, the virtual image display device 1A is mounted on a device of other forms other than a head-mounted display.

As illustrated in FIG. 2, the virtual image display device 1A includes the image display element 10, the propagation optical system 20, and the optical system 1B. In FIG. 2, the left or right eye EY of the wearer is illustrated.

The image light from the image display element 10 is propagated to the light guide 30 through the propagation optical system 20 and is then incident into the light guide 30 through an incident surface 310 of the light guide 30. In the virtual image display device 1A configured as a form of the head-mounted display 1, the lens portion 3 corresponds to the light guide 30. The propagation optical system 20 is embedded in a portion of the frame portion 2 that covers the upper edge of the lens portion 3, as in the image display element 10.

In the light guide 30, multiple partial reflectors 320 are disposed to split the image light entered through the incident surface 310 of the light guide 30, into reflected light and transmitted light. Each of the partial reflectors 320 has a partial reflection surface that has, for example, a reflectance and transmittance of 5% or more for image light.

The partial reflectors 320 are oriented to allow the image light to form a predetermined angle (e.g., an angle of 45 degrees) relative to the y-direction. The partial reflectors 320 are, for example, semi-reflective mirrors. The partial reflectors 320 may be polarizing beam splitters (PBS). The reflectances of the partial reflectors 320 are achieved by, for example, coating.

The partial reflectors 320 reflect a part of the image light guided in the light guide 30 and emits the image light to the outside from the light-emission surface 340 of the light guide 30. The image light emitted from the light-emission surface 340 reaches the eye EY of the wearer and is observed by the wearer as a virtual image.

In the light guide 30, a polarizer 70 is placed on the outer surface 350 of the light guide 30. The polarizer 70 is, for example, a sheet material that covers the entire outer surface 350. The polarizer 70 has a higher transmittance for first polarized light polarized in a first polarization direction (or a higher transmittance in the first polarization direction) than for second polarized light polarized in a second polarization direction (or in the second polarization direction) that is orthogonal to the first polarization direction with respect to vertical incident light perpendicularly incident on the polarizer 70 with an incidence angle of 0 degrees. In other words, the polarizer 70 has a first transmittance in a first polarization direction higher than a second transmittance in a second polarization direction orthogonal to the first polarization direction, with respect to vertical incident light incident perpendicularly on the polarizer 70.

Further, each of the partial reflectors 320 has a lower reflectance for the first polarized light than for the second polarized light with respect to the vertical incident light. In other words, the partial reflector has a first reflectance in the first polarization direction lower than a second reflectance in the second polarization direction, with respect to the vertical incident light.

As described above, the optical system 1B according to the present embodiment includes the light guide 30, the partial reflectors 320, and the polarizer 70. The light guide 30 guides image light from the image display element 10 that displays an image. The partial reflectors 320 reflect a part of the image light guided in the light guide 30 and emits the image light to the outside through the light-emission surface 340 of the light guide 30. The polarizer 70 is placed on the outer surface 350 of the light guide 30. The outer surface 350 is located opposite to the light-emission surface 340.

The polarizer 70 has a higher transmittance for the first polarized light polarized in the first polarization direction than for the second polarized light polarized in the second polarization direction that is orthogonal to the first polarization direction with respect to vertical incident light perpendicularly incident on the polarizer 70. Further, the partial reflector 320 has a lower reflectance for the first polarized light than for the second polarized light with respect to the vertical incident light.

In the present embodiment, the first polarized light is light polarized in a polarization direction (or the first polarization direction) parallel to the drawing sheet (or the yz plane) of FIG. 2, and the second polarized light is light polarized in a polarization direction (or the second polarization direction) orthogonal to the drawing sheet of FIG. 2. The first polarized light that is perpendicularly incident on the polarizer 70 corresponds to the S-polarized light when the perpendicularly incident light strikes the partial reflectors 320. The second polarized light that is perpendicularly incident on the polarizer 7 corresponds to the P-polarized light when the perpendicularly incident light strikes the partial reflector 320. In another embodiment of the present disclosure, the first polarization is light polarized in a polarization direction that is orthogonal to the drawing sheet of FIG. 2, and the second polarized light is light in a polarization direction parallel to the drawing sheet of FIG. 2.

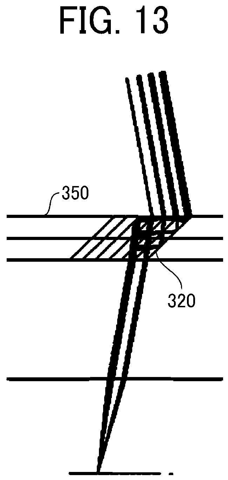

FIG. 13 is a diagram of an optical path of light that causes ghosting or flaring in the optical system 1B, according to an embodiment of the present disclosure. As illustrated in FIG. 13, ghosting or flaring occurs due to the external light reflecting off the partial reflectors 320 after entering the light guide 30 through the outer surface 350.

As described above, by combining the transmittance of the polarizer 70 and the reflectance of each of the partial reflectors 320 for each polarized light, the reflectances of the partial reflectors 320 can be reduced for the external light (e.g., the first polarized light in the present embodiment) transmitted at a high transmittance through the outer surface 350 of the light guide 30. This configuration reduces the amount of external light reflected by the partial reflectors 320, decreasing the intensity of ghosting or flaring light reaching the eye of the wearer. Thus, this effectively reduces phenomena such as ghosting or flaring, particularly in bright external conditions.

The above effects are described using specific numerical values. In a comparative example, the polarizer 70 is replaced by a neutral density (ND) filter.

Numerical conditions for an optical system for a virtual display device according to a comparative example and the optical system 1B for the virtual image display device according to an embodiment of the present disclosure are as follows, respectively. The configurations of these two optical systems for the virtual image display device are common except for the following numerical conditions. The absorption of external light by each optical element is not considered.

Comparative Example

ND filter

Dimming rate: 50%

Partial reflection surface

The reflectance for the first polarized light: 0%
The reflectance for the second polarized light: 20%

External light reaching the eyes of the wearer

First polarized light: 50% = (50% transmittance of the ND filter) × (100% transmittance of the partial reflection surface for the first polarized light)
Second polarized light: 40% = (50% transmittance of the ND filter) × (80% transmittance of the partial reflection surface for the second polarized light)
Total: 45% = {(50% for the first polarized light) + (40% for the second polarized light) }/2

Amount of external light causing ghosting or flaring

First polarized light: 0% = (50% transmittance of the ND filter) × (0% reflectance of the partial reflection surface for the first polarized light)

Second polarized light: 10% = (50% transmittance of the ND filter) × (20% reflectance of the partial reflection surface for the second polarized light)

Total: 5% = {(0% for the first polarized light) + (10% for the second polarized light) }/2

Embodiments of the present disclosure

Polarizer 70

The transmittance for the first polarized light: 90%
The transmittance for the second polarized light: 0%

Partial reflection surface

The reflectance for the first polarized light: 0%
The reflectance for the second polarized light: 20%

External light reaching the eyes of the wearer

First polarized light: 90% = (90% transmittance of the polarizer 70) × (100% transmittance of the partial reflection surface for the first polarized light)

Second polarized light: 0% = (0% transmittance of the polarizer 70) × (80% transmittance of the partial reflection surface for the second polarized light)

Total: 45% = {(90% for the first polarized light) + (0% for the second polarized light) }/2

Amount of external light causing ghosting or flaring

First polarized light: 0% = (90% transmittance of the polarizer 70) × (0% reflectance of the partial reflection surface for the first polarized light)

Second polarized light: 0% = (0% transmittance of the polarizer 70) × (20% reflectance of the partial reflection surface for the second polarized light)

Total: 0% = {(0% for the first polarized light) + (0% for the second polarized light) }/2

As described above, in the present embodiment, external light causing ghosting or flaring is reduced more than in the comparative example, while maintaining equivalent see-through properties.

In addition, when the virtual image display device 1A according to the present embodiment is configured as a wearable device as illustrated in FIG. 1, for example, light reflected on the water surface is blocked by the polarizer 70 as in polarized sunglasses. The wearer can visually recognize an object in water, even under, for example, sunlight reflections on the surface.

As illustrated in FIG. 2, multiple partial reflectors 320 are placed at predetermined intervals along the optical axis AX in the light guide 30.

In this configuration, the multiple partial reflectors 320 split the image light into multiple light beams. This enables a wide eye box and a wide angle of view irrespective of using a thinner light guide 30. This allows the wearer to visually identify or perceive the virtual image easily and also a virtual image with a wide angle of view, irrespective of the movement of the eye EY relative to the virtual image display device 1A.

With the partial reflectors 320 spaced too closely, for example, non-uniformity in light amount (or non-uniformity in the luminance of a virtual image) is more likely to occur because image light that has reflected off one of the first partial reflectors 320 further reflects off another of the second partial reflectors 320 adjacent to the first one of the partial reflectors 320. The numerous partial reflectors 320 may more likely interfere with the wearer's field of view, potentially obstructing, for instance, the wearer's view of the external scenery. By contrast, with the partial reflectors 320 spaced too widely, for example, the virtual image appears partially missing depending on a location within the eye box. In view of such circumstances, the partial reflectors 320 are preferably spaced with appropriate intervals.

The interval may be equal or may not be equal between adjacent partial reflectors of the multiple partial reflectors 320.

The partial reflectors 320 include, for example, a partial reflection surface formed in a plane. Such a configuration with the partial reflectors 320 formed in a plane increases the ease of manufacture.

Cases in which the light guide 30 includes the multiple partial reflectors 320 each having a non-flat surface (e.g., a surface having a curvature) are considered. In this configuration, adjacent partial reflectors 320 are formed in different shapes to display a high-resolution virtual image with aberrations successfully corrected. In order to correct aberrations successfully, the aberration correction is shared by the partial reflectors 320 and an optical system (one or more optical components) closer to the image display element 10 than the partial reflectors 320 along the optical path of the image light. To achieve such a performance, each of the multiple partial reflectors 320 has a shape with a different free-form surface. This structure makes it difficult to achieve ease of manufacture and to correct aberrations.

In FIG. 2, the light guide 30 includes multiple optical blocks including the first optical block and the second block). The first optical block has a partial reflection surface that makes up one of the partial reflectors 320 formed on its inclined surface. The inclined surface on which the partial reflection surface is formed in the first optical block is bonded to the inclined surface of the second optical block (on which the partial reflection surface is not formed) to form the light guide 30.

Each of the partial reflection surfaces is composed of a deposited film formed by depositing a metal material, for example. To increase the degree of adhesion between the optical blocks, a primer layer may be formed on the inclined surface of the optical block before forming the partial reflection surface on the primer layer.

Each optical block of the light guide 30 is a molded product made of synthetic resin such as plastic. The light guide 30 made of such resin is lightweight. With a decrease in the weight of the light guide 30, the load on the nose of the wearer (the user) decreases. For this reason, the wearer can continue wearing the head-mounted display 1 for a long time without getting fatigued.

The light guide 30 may be made of glass.

As described in Numerical Examples 1 to 4, the virtual image display device 1A may include an aperture stop. The aperture stop is disposed on the optical path between the image display element 10 and the partial reflectors 320 (for example, between the image display element 10 and the light guide 30). The aperture stop substantially narrows the image light from the image display element 10 into an aberration-corrected image light. From another point of view, unnecessary light whose aberration is not corrected can be cut by the aperture stop. This reduces the occurrence of flaring and enables a higher image quality.

Further, the aperture stop with an appropriately set size allows a depth of field sufficient to achieve the intended performance and enables higher resolution.

The shape of the aperture stop may be circular or rectangular, and multiple aperture stops may be arranged in a direction perpendicular to the optical axis AX. Such multiple small apertures provide an eye box and allow a virtual image with a wide depth of field.

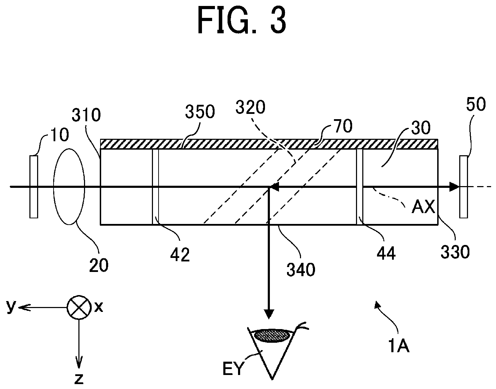

FIG. 3 is a schematic diagram of a virtual image display device 1A according to another embodiment of the present disclosure. The virtual image display device 1A illustrated in FIG. 3 further includes a polarizing plate 42, a polarization control element 44, and a reflector 50.

In the configuration where image light is guided within the light guide 30 through total internal reflection, satisfying the conditions for total reflection makes it challenging to place the polarizer 70 closely on the outer surface 350 of the light guide 30. To address this challenge, in the present embodiment, the dimensions of the light guide 30 (e.g., dimensions in the x-direction and the z-direction) are made larger than the beam width of the image light guided within the light guide 30, allowing the image light to be guided without total internal reflection in the light guide 30. In the optical configuration of the virtual image display device 1A, the beam diameter of the image light guided along the optical axis AX falls within the light guide 30.

To allow the beam diameter of the image light guided along the optical axis AX to fall within the light guide 30, the virtual image display device 1A includes an intermediate image former. The intermediate image former forms an intermediate image I of the image light from the image display element 10 in the light guide 30. In FIG. 3, for example, the propagation optical system 20 serves as the intermediate image former.

The image light from the image display element 10 and passed through the propagation optical system 20 is guided in the -y-direction (i.e., along the optical axis AX) and passes through the polarizing plate 42 within the light guide 30 while reducing its beam width. Then, the image light forms an intermediate image near the partial reflectors 320. The image light transmitted through the partial reflectors 320 passes through the polarization control element 44 and reaches an end face 330 of the light guide 30. The image light, having a beam diameter that falls within the light guide 30, is guided in the light guide 30. This allows the image light to proceed to the end face 330 without undergoing total reflection. The polarizing plate 42 and the polarization control element 44 are to be described later.

Since the image light is guided without undergoing total internal reflection in the light guide 30, the polarizer 70 can be held on the outer surface 350 of the light guide 30. This configuration eliminates the use of a dedicated holder for holding the polarizer 70, achieving a simple configuration of the virtual image display device 1A. This further achieves a reduction in the size of the virtual image display device 1A.

The image light is emitted through the end face 330 of the light guide 30 and reflected by the reflector 50. The image light reflected by the reflector 50 re-enters the light guide 30 through the end face 330 and is guided toward the partial reflectors 320 in the +y-direction without undergoing total internal reflection.

In FIG. 3, the partial reflectors 320 is between a first area, where the image display element 10 is placed, and a second area. The reflector 50 is positioned in the second area opposite the first area. In some embodiments, the second area is different from, but is not opposite to, the first area. In the virtual image display device 1A configured as the head-mounted display 1, the reflector 50 is positioned at a lower frame portion below the lens portion 3, facing the image display element 10 in an upper frame portion above the lens portion 3. The reflector 50 reflects the first image light, which is transmitted through the partial reflectors 320, and is guided in a first direction (e.g., the -y-direction), back to the partial reflectors 320 as second image light guided in a second direction (e.g., the +y-direction).

More specifically, the reflector 50 converts the image light emitted from the end face 330 of the light guide 30 into collimated light and reflects the collimated light back toward the partial reflectors 320. As a result, the collimated light is guided in the +y-direction within the light guide 30, reflecting off the partial reflectors 320 in the +z-direction. Thus, the reflected light exits externally through the light-emission surface 340 of the light guide 30, reaching the eyes EY of the wearer.

The collimated light may include substantially collimated light (light that diverges very slightly or light that converges very slightly).

As described above, the reflector 50 converts the image light into collimated light, allowing the image light to be guided in the +y-direction (i.e., along the optical axis AX) while maintaining the beam diameter that falls within the bounds of the light guide 30, until the image light reaches the partial reflectors 320. In this case, the image light proceeds to the partial reflectors 320 without undergoing total reflection.

In FIG. 3, the propagation optical system 20 forms an intermediate image with image light from the image display element 10, in the light guide 30 as described above. This reduces the thickness of the light guide 30. In other words, the size of the light guide 30 in the z-direction is reduced. The reduction in the thickness of the light guide 30 enables a lightweight light guide 30. With a decrease in the weight of the light guide 30, the load on the nose of the wearer (the user) decreases. For this reason, the wearer can continue wearing the head-mounted display 1 for a long time without getting fatigued.

Further, forming an intermediate image with the image light emitted from the image display element 10 in the light guide 30 allows the pupil of the optical system 1B for the virtual image display device to be in the vicinity of the eye EY of the wearer. This allows for a wider eye box as well as a wider angle of view.

The image light guided in the +y-direction reflects off the partial reflectors 320 in the +z-direction, exiting from the light-emission surface 340 of the light guide 30 to the outside. The image light emitted from the light-emission surface 340 reaches the eye EY of the wearer and is observed by the wearer as a virtual image.

The partial reflectors 320 transmit a part of the first image light guided in the -y-direction within the light guide 30 (i.e., the first image light guided in a first direction from the image display element 10 that is located in the first area, with the partial reflectors 320 between the first area and the second area). The partial reflectors 320 further reflects, in the +z-direction, a part of the second image light guided in the +y-direction (i.e., the second direction different from the first direction) within the light guide 30, emitting image light to the outside of the light guide 30 through the light-emission surface 340.

The following describes a specific configuration of the virtual image display device 1A according to an embodiment of the present disclosure.

When receiving the first image light guided in the first direction (e.g., the -y-direction) within the light guide 30, the partial reflectors 320 transmits a part of the first image light, directing it toward the reflector 50. The partial reflector 32 also reflects the rest of the first image light received, to exit outside through the outer surface 350 opposite to the light-emission surface 340. In order to reduce the amount of image light leaking outward, the transmittance of the partial reflectors 320 is to be increased (i.e., the reflectance of the partial reflectors 320 is to be reduced). However, if the transmittance of the partial reflectors 320 is increased, most of the second-direction image light (i.e., the image light guided in the +y-direction within the light guide 30) passes through the partial reflectors 320. This means that less image light is reflected in the +z-direction at the partial reflectors 320 and directed toward the eye EY of the wearer.

In the present embodiment, the virtual image display device 1A further includes a polarizing plate 42 and a polarization control element 44 to enhance the light utilization efficiency.

The polarizing plate 42 is located between the image display element 10 and the partial reflectors 320. The polarizing plate 42 converts the image light directed from the first area where the image display element 10 is located toward the partial reflectors 320, into the first polarized light. When multiple partial reflectors 320 are used, the polarizing plate 42 is located between the image display element 10 and a partial reflector 320 closest to the image display element 10 among the multiple partial reflectors 320.

The polarizing plate 42 may be replaced by a polarizing film that converts the image light directed from the first area where the image display element 10 is located toward the partial reflectors 320, into the first polarized light. The polarizing film is formed on the surface of any optical element disposed between the image display element 10 and the partial reflectors 320. The polarizing film is formed on the incident surface 310 of the light guide 30, for example, and converts the image light traveling toward the partial reflectors 320 into the first polarized light.

When forming the polarizing film on the surface of the optical element, the polarizing plate 42 is not used. This allows for a reduction in the number of components of the virtual image display device 1A.

Further, the partial reflectors 320 have a lower reflectance for the first polarized light than for the second polarized light when receiving image light being guided in the direction parallel to the optical axis AX. Most of the image light converted into the first polarized light by the polarizing plate 42 passes through the partial reflectors 320, exhibiting a low amount of reflection at the partial reflector 320. The amount of image light that reflects off the partial reflectors 320 and leaks to the outside from the outer surface 350 is reduced by setting the reflectance of the partial reflectors 320 as described above. In addition, the amount of image light leaking to the outside from the outer surface 350 is further reduced by the polarizer 70. Considering that the placement of the polarizer 70 can reduce the amount of image light leaking to the outside, the polarizing plate 42 may be omitted from the constituent elements. By not placing the polarizing plate 42 on the optical path of the image light, for example, more image light can be delivered to the eye EY of the wearer.

The polarization control element 44, which serves as a polarization converter, is located between the partial reflectors 320 and the reflector 50. More specifically, the polarization control element 44 is located between the partial reflectors 320 and the reflecting surface included in the reflector 50. The polarization control element 44 rotates the first polarization of the first image light, transmitted through the partial reflectors 320, guided in the first direction, and further rotates the second polarization of the second image light, reflected by the reflector 50, guided in the second direction. Thus, the first image light that is the first polarized light when passing through the partial reflectors 320 can be changed to the second polarized light through the rotation of the polarization.

More specifically, the polarization control element 44 is a quarter-wave plate. The first-polarized image light transmitted through the partial reflectors 320 has its polarization direction rotated by 45 degrees by the polarization control element 44. Such first-polarized image light reflects off the reflector 50 and then re-enters the polarization control element 44. The image light is further rotated by 45 degrees by the polarization control element 44, becoming the second polarized light. The second polarized light enters the partial reflectors 320.

Further, the partial reflectors 320 have a higher reflectance for the second polarized light than for the first polarized light, with respect to image light being guided in the direction parallel to the optical axis AX. Most of the image light converted into the second polarized light reflects off the partial reflectors 320 without passing therethrough and exits externally from the light-emission surface 340 of the light guide 30, reaching the eye EY of the wearer.

As described above, the virtual image display device 1A according to the present embodiment allows a reduction in the amount of the image light that leaks to the outside of the light guide 30 after reflecting off the partial reflectors 320, enabling more image light to reach the eye EY. Thus, the virtual image display device 1A according to the present embodiment achieves high light utilization efficiency.

To achieve a further reduction in ghosting or flaring, the virtual image display device 1A satisfies formulae (1) and (2) below. In the following formulae (1) and (2), TA indicates the transmittance (%) of the first polarized light for light that has entered the polarizer 70 perpendicularly, and TB indicates the transmittance (%) of the second polarized light for the light that has entered the polarizer 70 perpendicularly. In other words, TA indicates the first transmittance (%) in the first polarization direction with respect to the vertical incident light incident perpendicularly on the polarizer 70, and TB indicates the second transmittance (%) in the second polarization direction with respect to the vertical incident light.

Formula (1)

$$60 < TA \leq 100$$

Formula (2)

$$0 \leq TB < 30$$

Satisfying the above formula (1) allows more external light to pass through the outer surface 350 of the light guide 30. This increases the difference between the external light and the light that causes ghosting or flaring, making it easier to reduce or prevent such ghosting and flaring. If the transmittance TA falls below 60%, the reduced external light passing through the outer surface 350 of the light guide 30 hinders sufficiently reducing the light that causes ghosting and flaring relative to the external light.

Satisfying the above formula (2) reduces the light that causes ghosting or flaring, making it easy to reduce or prevent such ghosting and flaring. If the transmittance TB exceeds 30%, more light causes ghosting or flaring, making it more difficult to reduce or prevent such ghosting and flaring.

To reduce or prevent non-uniformity in the luminance of a virtual image while enhancing the brightness of image light, the virtual image display device 1A satisfies formula (3) below. In the following formula (3), $RB_{MIN}$ indicates the lowest reflectance (%) among the reflectances of the multiple partial reflectors 320 for the second polarized light. In other words, $RB_{MIN}$ indicates a lowest second reflectance (%) in the second polarization direction among second reflectances of the multiple partial reflectors in the second polarization direction.

$$\text{Formula (3)}$$

$$5 < RB_{MIN} < 30$$

If the reflectance $RB_{MIN}$ exceeds 30%, the image light increases in brightness, making it difficult to control the non-uniformity in the luminance of the virtual image. If the reflectance $RB_{MIN}$ falls below 5%, the image light becomes excessively dark. In addition, when the reflectance of the second polarized light is reduced in the partial reflectors 320 closer to the end face 330 of the light guide 30, the non-uniformity in the luminance of the virtual image is reduced.

To reduce or prevent the non-uniformity in the luminance of a virtual image and homogenize the light distribution of the blocked external light, the virtual image display device 1A satisfies formula (4) below. In the following formula (4), $RB_{MIN}$ indicates the lowest reflectance (%) among the reflectances of the multiple partial reflectors 320 for the second polarized light, and $RB_{MAX}$ indicates a highest reflectance (%) among the reflectances of the multiple partial reflectors 320 for the second polarized light. In other words, $RB_{MAX}$ indicates a highest second reflectance (%) in the second polarization direction among the second reflectances of the multiple partial reflectors in the second polarization direction.

$$\text{Formula (4)}$$

$$0.1 < RB_{MIN} / RB_{MAX} < 0.4$$

If the value $RB_{MIN}/RB_{MAX}$ exceeds 0.4, homogenizing the light distribution of the blocked external light is difficult. If the value $RB_{MIN}/RB_{MAX}$ falls below 0.1, the non-uniformity in the luminance of the virtual image increases.

To reduce or prevent ghosting or flaring, the virtual image display device 1A satisfies formula (5) below. In the following formula (5), $RA_{MAX}$ indicates the highest reflectance (%) among the reflectances of the multiple partial reflectors 320 for the first polarized light. In other words, $RA_{MAX}$ indicates a highest first reflectance (%) in the first polarization direction among first reflectances of the multiple partial reflectors in the first polarization direction.

$$\text{Formula (5)}$$

$$0 < RA_{MAX} < 25$$

If the reflectance $RA_{MAX}$ exceeds 25%, reducing or preventing ghosting or flaring becomes difficult. Achieving zero (0%) reflectance $RA_{MAX}$ is challenging in manufacturing.

In some embodiments, the virtual image display device 1A further includes a dimmer (for example, an ND filter) that dims or reduces external light entering the light guide 30 through the outer surface 350. The dimmer is stacked on, for example, the polarizer 70. In some embodiments, the polarizer 70 includes a dimmer. In other words, an absorptive function may be added to the polarizer 70.

For example, in bright viewing environments such as outdoors, external light might be attenuated to enhance the visibility of the virtual image. In such a case, it is preferable, for example, to place a dimmer on the outer surface 350 of the light guide 30 to reduce the external light entering the light guide 30 through the outer surface 350. When the dimmer is placed on the light-emission surface 340 of the light guide member 30, not only the external light but also the image light is dimmed, and thus it is difficult to enhance the visibility of the virtual image.

Numerical Examples 1 to 4 of the image display device 1A are described below. Numerical Examples 1 to 4 are described with a change in the coordinate axes, following the usual approach for depicting the shape of optical components. More specifically, two directions orthogonal to the optical axis AX are defined as an xl-direction and a yl-direction. In the virtual image display device 1A configured as a head-mounted display 1, the x1-direction is coincident with the width direction of the lens portion 3. The y1-direction is the depth direction of the lens portion 3, which is orthogonal to the optical axis AX and the width direction of the lens portion 3. When the optical path is bent by 90 degrees by the partial reflectors 320, the direction of the optical axis AX is also changed by 90 degrees, so that both the x1-direction and the y1-direction are rotated by 90 degrees.

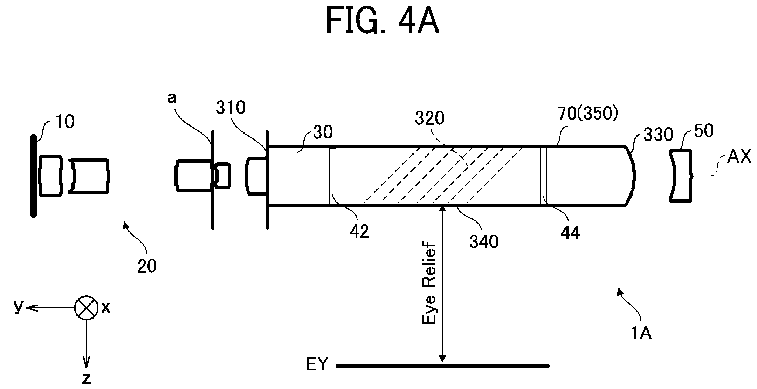

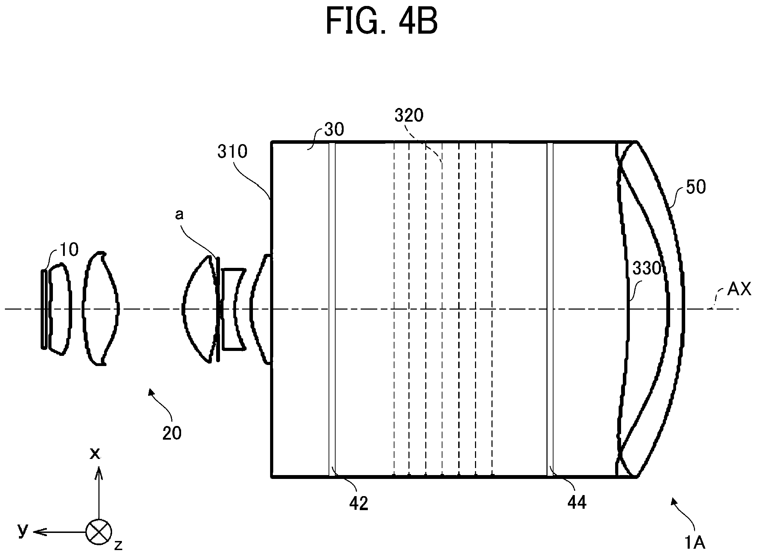

FIGS. 4A and 4B illustrate the optical configuration of the virtual image display device 1A according to Numerical Examples 1 to 4. FIG. 4A illustrates a yz cross-sectional plane of the virtual image display device 1A according to Numerical Examples 1 to 4. FIG. 4B illustrates an xy cross-sectional plane of the virtual image display device 1A according to Numerical Examples 1 to 4. The yz cross-sectional plane in FIG. 4A and the xy cross-sectional plane in FIG. 4B are sections defined with the optical axis AX as the y-direction and the direction toward the eye EY of the wearer as the z-direction.

As illustrated in FIGS. 4A and 4B, the virtual image display device 1A according to Numerical Examples 1 to 4 includes an image display element 10, a propagation optical system 20, a light guide 30, and a reflector 50, which are arranged in order from the image display element 10.

An aperture stop a is disposed in the propagation optical system 20. The aperture stop a has a rectangular aperture of 1.5 millimeters (mm) vertically and 6.9 mm horizontally. The aperture stop a may have a different shape such as a circular shape.

The light guide 30 has a thickness of 5.5 mm, which is the dimension of the light guide 30 in the z-direction, for example, in FIG. 4A. In the light guide 30, seven partial reflectors 320 formed in a planar shape are arranged at intervals of 1.6 mm. The polarizing plate 42 and the polarization control element 44 are placed within the light guide 30. The reflector 50 has a reflecting surface on its -y-side surface.

The angles of view of the virtual image in the vertical direction, the horizontal direction, and the diagonal direction are 20.0 degrees, 35.4 degrees, and 40.0 degrees, respectively. The distance to the virtual image is infinite.

Table 1A and Table 1B present the specific numerical configurations of the virtual image display device 1A according to Numerical Examples 1 to 4. In the following description, Table 1A and Table 1B are collectively referred to as "Table 1". In Table 1, Ry (mm) indicates the radius of curvature (or paraxial radius of curvature) of each surface of the optical elements along the y1-axis, which is an axis parallel to the y1-direction, i.e., in the lens cross-section in the yz plane including the optical axis AX. Further, Rx (mm) indicates the radius of curvature (or paraxial radius of curvature) of each surface of the optical elements along the x1-axis, which is an axis parallel to the x1-direction, i.e., in the lens cross-section in the xz plane including the optical axis AX. Further, D (mm) indicates the thickness of an optical component or the distance between optical components along the optical axis AX, Nd indicates the refractive index of the d-line with a wavelength of 587.562 nm, and vd indicates an Abbe number of the d-line. The right column of the Abbe number in Table 1 presents the product name and manufacturer of the material of the optical element.

The numbers in Table 1 are assigned to the respective surfaces of the virtual image display device 1A in order from the image display element 10. In Table 1, number (No.) 0 indicates an image display surface (i.e., pixel array surface) of the image display element 10. In Table, No. 1 and No. 2 indicate the surfaces of the cover glass included in the image display element 10.

The cover glass is a glass plate that covers the image display surface of the image display element 10.

In Table 1, No. 3 to No. 14 correspond to the optical paths from the propagation optical system 20 to the reflecting surface of the reflection unit 50. In Table 1, No. 15 and subsequent numbers correspond to the optical paths from the reflecting surface of the reflector 50 to the eye EY of the wearer. The interval D for No. 19 indicates the distance between the light-emission surface 340 and the eye EY of the wearer, that is, an eye relief.

The mark "A" in the interval D column for No. 17 in Table 1 indicates the distance between the reflecting surface of the reflector 50 and each of the partial reflectors 320 (or each of the partial reflection surfaces of the partial reflectors 320) along the optical axis AX. For convenience, this distance will be referred to as distance A. The distance A includes 13.2 mm, 14.8 mm, 16.4 mm, 18.0 mm, 19.6 mm, 21.2 mm, and 22.8 mm in order from the partial reflectors 320 closest to the reflecting surface of the reflector 50 among seven partial reflectors 320. In other words, the seven partial reflectors 320 are disposed at equal intervals of 1.6 mm.

[Table 1A]

|   | Ry | Rx | D | Nd |
|---|---|---|---|---|
| 0 | ∞ | ∞ | 0.00 | |
| 1 | ∞ | ∞ | 0.30 | 1.51633 |
| 2 | ∞ | ∞ | 0.44 | |
| 3* | 7.121 | 13.040 | 1.97 | 1.63200 |

(continued)

|      | Ry         | Rx       | D     | Nd      |
|------|------------|----------|-------|---------|
| 4*   | 3.758      | -20.502  | 1.26  |         |
| 5*   | -18.616    | 14.074   | 3.28  | 1.53100 |
| 6*   | -11.259    | -7.647   | 6.40  |         |
| 7*   | 9.968      | 5.998    | 3.34  | 1.53100 |
| 8*   | -10.450    | -15.964  | 0.00  |         |
| 9    | APERTURE STOP |       | 0.40  |         |
| 10*  | -5.011     | 41.194   | 1.21  | 1.63200 |
| 11*  | -25.091    | 7.806    | 1.54  |         |
| 12*  | 4.959      | 6.716    | 36.58 | 1.53100 |
| 13*  | -4.475     | -53.379  | 3.84  |         |
| 14*  | -4.679     | -19.428  | 1.500 | 1.53100 |
| 15*  | -29.831    | -31.910  | -1.50 | 1.53100 |
| 16*  | -4.679     | -19.428  | -3.84 |         |
| 17*  | -4.475     | -53.379  | A     | 1.53100 |
| 18   | ∞          | ∞        | 2.500 | 1.53100 |
| 19   | ∞          | ∞        | 15.00 |         |

[Table 1B]

| | | $\nu$ d | | |
|---|---|---|---|---|
| 0 | | | | |
| 1 | | 64.14 | | S-BSL7(OHARA) |
| 2 | | | | |
| 3* | | 23 | | OKP4HT(Osaka Gas Chemicals) |
| 4* | | | | |
| 5* | | 56 | | E48R(ZEON) |
| 6* | | | | |
| 7* | | 56 | | E48R(ZEON) |
| 8* | | | | |
| 9 | | | | |
| 10* | | 23 | | OKP4HT(Osaka Gas Chemicals) |
| 11* | | | | |
| 12* | | 56 | | E48R(ZEON) |
| 13* | | | | |
| 14* | | 56 | REFLECTION | E48R(ZEON) |
| 15* | | 56 | | E48R(ZEON) |
| 16* | | | | |
| 17* | | 56 | | E48R(ZEON) |
| 18 | | 56 | REFLECTION | E48R(ZEON) |
| 19 | | 56 | | |

In Table 1, the surfaces marked with "*" represent aspherical surfaces. More specifically, these aspherical surfaces are anamorphic aspherical surfaces having an anamorphic power.

Tables 2A to 2C present data for the aspherical surfaces of the virtual image display device 1A according to Numerical Examples 1 to 4. In the following description, Tables 2A to 2C are collectively referred to as "Table 2". In Table 2, the capital letter "E" represents a power in which 10 is the base and the number on the right of E is an exponent. The radius of curvature R of the aspherical surface is represented by a radius of curvature (paraxial radius of curvature) along the optical axis AX. The aspherical shape is given by the following equation, where Z is a sag amount, C is a paraxial radius of curvature (1/R), h is a height from the optical axis AX (mm), K is a conic constant, and $A_4$, $A_6$,. are aspherical coefficients of even orders equal to or higher than the fourth order.

$$Z = Ch^2/\{1 + \sqrt{(1-(1+k)c^2h^2)}\} + a^4 \cdot h^4 + a^6 \cdot h^6 + a^8 \cdot h^8 + a^{10} \cdot h^{10}$$

Further, the shape of the anamorphic aspherical surface satisfies the following equation where Cx is a paraxial radius of curvature (1/Rx) in the x1-axis, Cy is a paraxial radius of curvature in the y1-axis, X (mm) is the height in the x1-axis from the optical axis AX, Kx is the conic constant in the x1-axis, Ky is the conic coefficient in the y1-axis, AR4, AR6, are even-numbered coefficients of rotational symmetry equal to or higher than the fourth order, and AP4, AP6,... are even-numbered coefficients of rotational asymmetry equal to or higher than the fourth order.

$$Z = (CxX^2 + CyY^2)/\{1 + \sqrt{(1-(1+Kx)\,Cx^2X^2 - (1+Ky)\,Cy^2Y^2)}\} + AR_4((1-AP_4)X^2 + (1+AP_4)Y^2)^2 + AR_6((1-AP_6)X^2 + (1+AP_6)Y^2)^3 + AR_8((1-AP_8)X^2 + (1+AP_8)Y^2)^4 + AR_{10} \cdot ((1-AP_{10})X^2 + (1+AP_{10})Y^2)^5$$

[Table 2A]

| | | Ky | Kx |
|---|---|---|---|
| Conic Coefficient | | | |
| | 3 | 0.000 | 0.516 |
| | 4 | 0.000 | 0.000 |
| | 5 | 0.000 | -15.811 |
| | 6 | 0.000 | -9.908 |
| | 7 | 0.000 | -0.341 |
| | 8 | 7.360 | 0.843 |
| | 10 | 0.000 | 0.000 |
| | 11 | 0.000 | 0.000 |
| | 12 | -1.884 | 0.259 |
| | 13 | -0.256 | -10.000 |
| | 14 | -0.278 | -0.500 |
| | 15 | 0.000 | 0.000 |
| | 16 | -0.278 | -0.500 |
| | 17 | -0.256 | -10.000 |

[Table 2B]

| | $AR_4$ | $AR_6$ | $AR_8$ | $AR_{10}$ |
|---|---|---|---|---|
| Rotational Symmetry Coefficient | | | | |
| 3 | -7.76323E-03 | -9.51252E-06 | 4.09087E-06 | 7.23929E-13 |
| 4 | -1.08531E-02 | -1.43957E-05 | -1.41519E-04 | 1.87999E-05 |
| 5 | -6.91645E-03 | 2.98692E-04 | -5.07347E-04 | 2.61763E-07 |
| 6 | -1.88451E-03 | 1.54666E-04 | -8.34437E-06 | 1.87228E-07 |
| 7 | -1.24619E-04 | 9.51852E-07 | 1.231 04E-05 | 8.01861E-09 |
| 8 | -1.56118E-03 | 5.52015E-05 | -1.40626E-07 | -5.79061E-07 |
| 10 | -3.28106E-04 | -2.06328E-04 | 2.15997E-05 | 1.68583E-08 |
| 11 | -2.86968E-04 | 3.92888E-08 | -1.05107E-05 | 4,93831E-06 |
| 12 | -1.62250E-03 | 5.83717E-05 | -8.11627E-08 | 2.55278E-07 |
| 13 | 2.93591E-08 | 1.02428E-05 | 1.11223E-10 | 2.82803E-08 |
| 14 | -1.29768E-06 | 1.84465E-05 | 1.14804E-11 | 1.04617E-06 |
| 15 | -4.09496E-06 | -1.85028E-08 | 1.28010E-10 | -7.20324E-13 |
| 16 | -1.29768E-06 | 1.84465E-05 | 1.14804E-11 | 1.04617E-06 |
| 17 | 2.93591E-08 | 1.02428E-05 | 1.11223E-10 | 2.82803E-08 |

[Table 2C]

| Rotational Asymmetry Coefficient | | | | |
|---|---|---|---|---|
| | $AP_4$ | $AP_6$ | $AP_8$ | $AP_{10}$ |
| 3 | 1.19630E-01 | -6.94471E-01 | -3.53908E-01 | -1.33206E+01 |
| 4 | 8.47243E-01 | 1.90423E+00 | 1.30206E+00 | 1.27887E+00 |
| 5 | 7.9910.3E-01 | 7.35097E-01 | 9.62117E-01 | 3.55081E-01 |
| 6 | -2.68841E-01 | -4.91645E-02 | 2.65334E-02 | 2.28358E-02 |
| 7 | -7.85875E-01 | 2.14649E+00 | 9.54031E-01 | -1.56432E-01 |
| 8 | 2.36166E-01 | 6.96725E-02 | 2.37405E+00 | 1.41869E+00 |
| 10 | -5.77476E-01 | 7.48724E-01 | 6.07359E-01 | 1.96399E+00 |
| 11 | 1.23526E+00 | 7.76237E+00 | 1.21748E+00 | 6.91632E-01 |
| 12 | 1.19117E-01 | 3.37799E-01 | -9.85168E-01 | 1.01347E+00 |
| 13 | 1.18977E+01 | 1.10488E+00 | -4.59784E-01 | 9.19629E-01 |
| 14 | -1.30332E+00 | 8.87715E-01 | -1.60782E+00 | 1.02959E+00 |
| 15 | 6.15069E-01 | 5.32757E-02 | -6.82193E-02 | 8.36410E-02 |
| 16 | -1.30332E+00 | 8.877 1 5E-0 1 | -1.60782E+00 | 1.02959E+00 |
| 17 | 1.18977E+01 | 1.10488E+00 | -4.59784E-01 | 9.19629E-01 |

In Numerical Examples 1 to 4, the transmittance of the polarizer 70 and the reflectance of the partial reflectors 320 are as follows.

Numerical Example 1
Polarizer 70
Transmittance of First polarized light (i.e., P-polarized light): 100%
Transmittance of Second polarized light (i.e., S-polarized light): 0%
Partial reflectors 320
Reflectance RA of First polarized light (i.e., P-polarized light): Starting from the partial reflector 320 closest to the reflector 50, the reflectances of the first polarized light are 1%, 1%, 2%, 2%, 4%, 6%, and 22%.
Reflectance RB of Second Polarized Light (S-polarized Light): Starting from the partial reflector 320 closest to the reflector 50, the reflectances of the second polarized light are 11%, 12%, 18%, 23%, 32%, 46%, and 88%.
Numerical Example 2
Polarizer 70
Transmittance of First polarized light (i.e., P-polarized light): 100%
Transmittance of Second polarized light (i.e., S-polarized light): 0%
Partial reflectors 320
Reflectance RA of First polarized light (i.e., P-polarized light): Starting from the partial reflector 320 closest to the reflector 50, the reflectances of the first polarized light are 1%, 1%, 1%, 2%, 2%, 3%, and 5%.
Reflectance RB of Second Polarized Light (S-polarized Light): Starting from the partial reflector 320 closest to the reflector 50, the reflectances of the second polarized light are 9%, 11%, 13%, 18%, 23%, 29%, and 43%.
Numerical Example 3
Polarizer 70
Transmittance of First polarized light (i.e., P-polarized light): 80%
Transmittance of Second polarized light (i.e., S-polarized light): 20%
Partial reflectors 320
Reflectance RA of First polarized light (i.e., P-polarized light): Starting from the partial reflector 320 closest to the reflector 50, the reflectances of the first polarized light are 1%, 1%, 1%, 2%, 2%, 3%, and 5%.
Reflectance RB of Second Polarized Light (S-polarized Light): Starting from the partial reflector 320 closest to the reflector 50, the reflectances of the second polarized light are 9%, 11%, 13%, 18%, 23%, 29%, and 43%.
Numerical Example 4
Polarizer 70

Transmittance of First polarized light (i.e., P-polarized light): 100%
Transmittance of Second polarized light (i.e., S-polarized light): 0%
Partial reflectors 320
Reflectance RA of First polarized light (i.e., P-polarized light): Starting from the partial reflector 320 closest to the reflector 50, the reflectances of the first polarized light are 2%, 2%, 3%, 3%, 3%, 5%, and 22%.
Reflectance RB of Second Polarized Light (S-polarized Light): Starting from the partial reflector 320 closest to the reflector 50, the reflectances of the second polarized light are 22%, 22%, 29%, 29%, 29%, 44%, and 88%.

In Numerical Examples 1 to 4 configured as described above, all of the above formulae (1) to (5) are satisfied as follows. Numerical Examples 1 to 4 exhibit the effects by satisfying the above formulae (1) to (5).

Numerical Example 1
Transmittance TA: 100% (see formula (1))
Transmittance TB: 0% (see formula (2))
Reflectance $RB_{MIN}$: 11% (see formula (3))
Value $RB_{MIN}/RB_{MAX}$: 0.13 (see formula (4))
Reflectance $RA_{MAX}$: 22% (see formula (5))
Numerical Example 2
Transmittance TA: 100% (see formula (1))
Transmittance TB: 0% (see formula (2))
Reflectance $RB_{MIN}$: 9% (see formula (3))
Value $RB_{MIN}/RB_{MAX}$: 0.21 (see formula (4))
Reflectance $RA_{MAX}$: 5% (see formula (5))
Numerical Example 3
Transmittance TA: 80% (see formula (1))
Transmittance TB: 20% (see formula (2))
Reflectance $RB_{MIN}$: 9% (see formula (3))
Value $RB_{MIN}/RB_{MAX}$: 0.21 (see formula (4))
Reflectance $RA_{MAX}$: 5% (see formula (5))
Numerical Example 4
Transmittance TA: 100% (see formula (1))
Transmittance TB: 0% (see formula (2))
Reflectance $RB_{MIN}$: 22% (see formula (3))
Value $RB_{MIN}/RB_{MAX}$: 0.25 (see formula (4))
Reflectance $RA_{MAX}$: 22% (see formula (5))

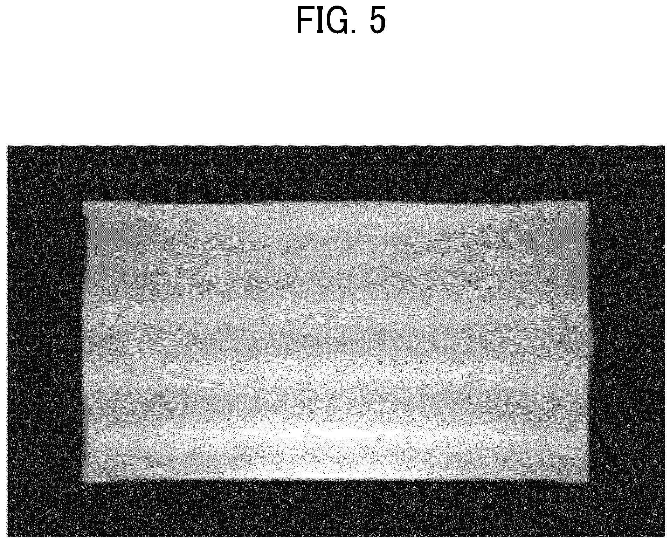

FIG. 5 is a diagram illustrating an illuminance distribution of image light in Numerical Example 1 of the present disclosure. In FIG. 5, the horizontal axis represents the angle of view in the horizontal direction (i.e., the x-direction), and the vertical axis represents the angle of view in the vertical direction (i.e., the y-direction). In the present embodiment, the eye EY of the wearer is assumed to be φ3 mm.
According to Numerical Example 1, as illustrated in FIG. 5, the illuminance distribution of the image light exhibits low unevenness.

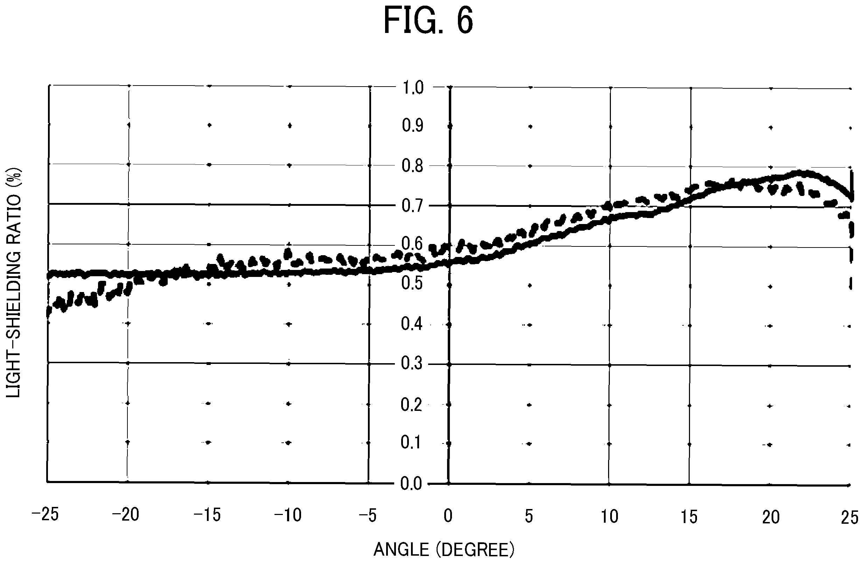

FIG. 6 is a graph of the light-shielding ratio of a virtual image display device according to Numerical Example 1. In FIG. 6, the horizontal axis represents the angle of view (degree) in the vertical direction (i.e., the y-direction), and the vertical axis represents the angle of view of the light-shielding rate (%). In the present embodiment, the eye EY of the wearer is assumed to be φ3 mm. The light-shielding rate indicates a ratio of external light that is reflected by the partial reflectors 320 and fails to reach the eye EY of the wearer (or external light that is blocked by the partial reflectors 320) with respect to external light that is incident on the outer surface 350 of the light guide 30.
In FIG. 6, the solid line indicates the light-shielding ratio according to Numerical Example 1. The dotted line indicates the light-shielding rate according to a comparative example. In the comparative example, an ND filer is used, instead of the polarizer 70 used in the virtual image display device 1A according to Numerical Example 1. In the comparative example, the dimming rate of the ND filter is set to 59%.
According to Numerical Example 1, as illustrated in FIG. 6, the difference in light-shielding rate between the angles of view is small. Due to minimal unnatural light and dark areas, the wearer can visually recognize the scenery of the outside world without any discomfort.

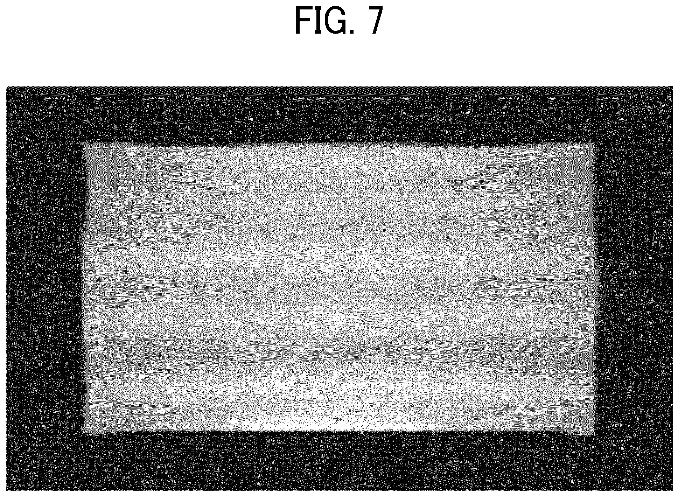

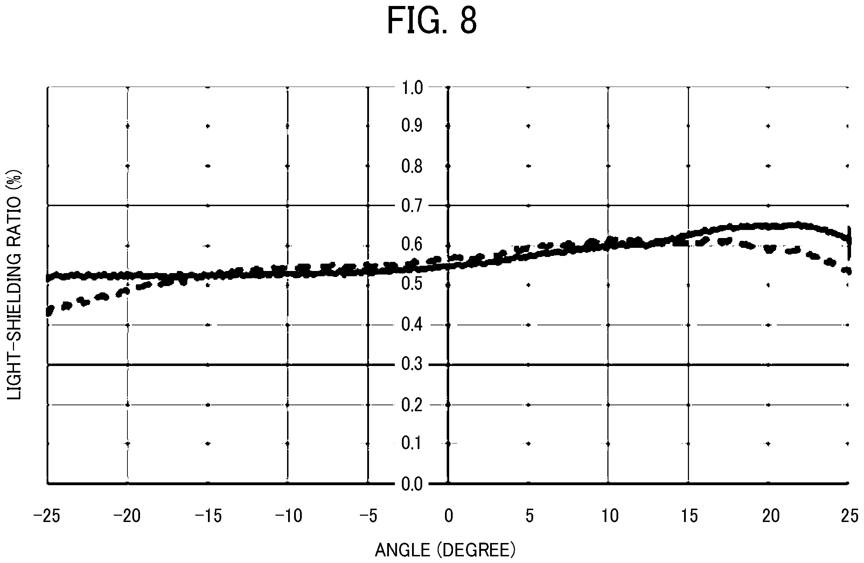

FIG. 7 is a diagram illustrating an illuminance distribution of image light in Numerical Example 2 of the present disclosure. FIG. 8 is a graph of the light-shielding ratio of a virtual image display device according to Numerical Example 2. In FIG. 8, the dotted line presents a comparative example where an ND filter is used, instead of the polarizer 70 used in the virtual image display device 1A according to Numerical Example 2. In the comparative example, the dimming rate of the ND filter is set to 59%.

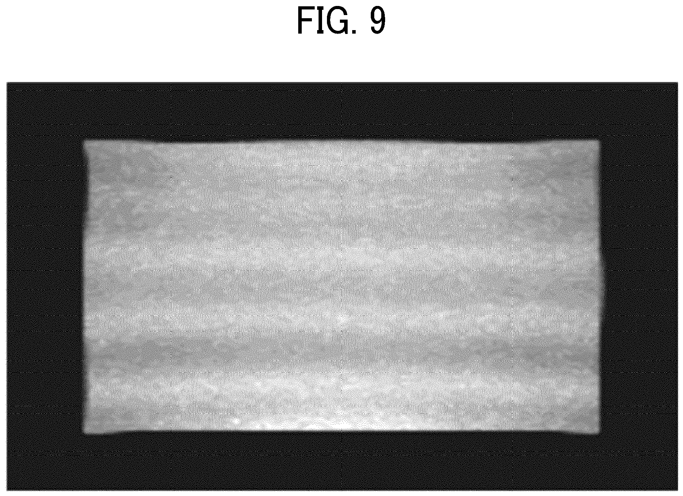

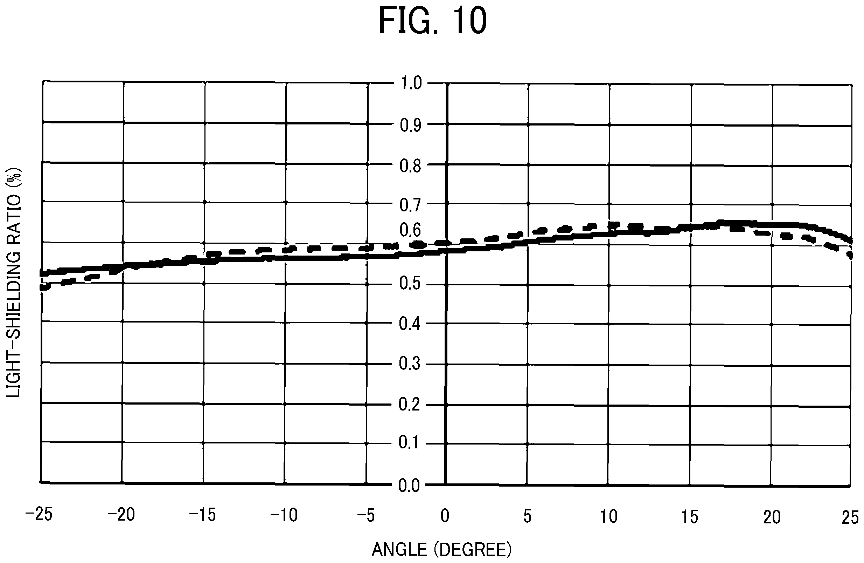

FIG. 9 is a diagram illustrating an illuminance distribution of image light in Numerical Example 3 of the present disclosure. FIG. 10 is a graph of the light-shielding ratio of a virtual image display device according to Numerical Example 3. In FIG. 10, the dotted line presents a comparative example where an ND filter is used, instead of the polarizer 70 used in the virtual image display device 1A according to Numerical Example 3. In the comparative example, the dimming rate of the ND filter is set to 53%.

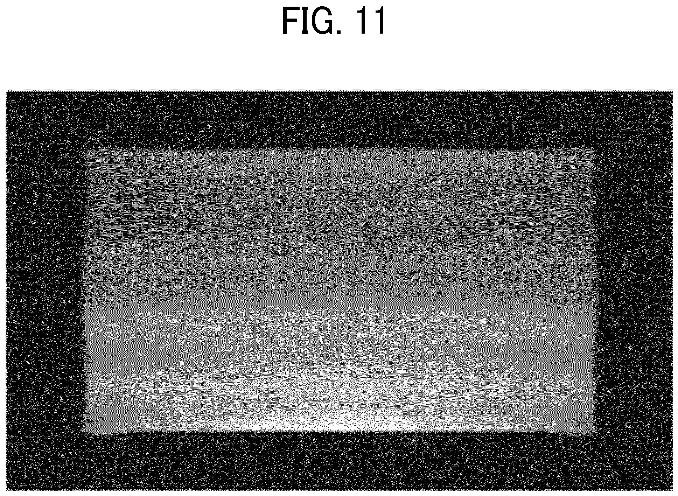

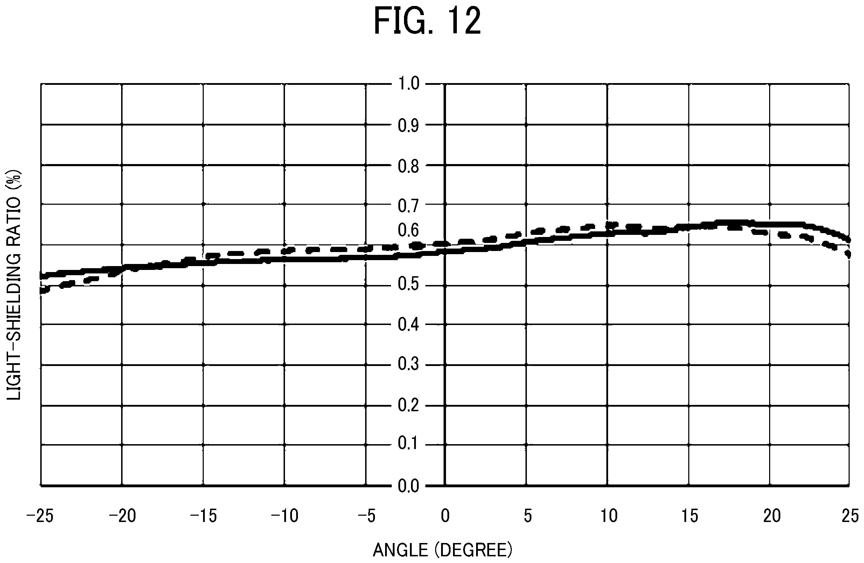

FIG. 11 is a diagram of the illuminance distribution of image light according to Numerical Example 4 of the present disclosure. FIG. 12 is a graph of the light-shielding ratio of a virtual image display device according to Numerical Example 4. In FIG. 12, the dotted line presents a comparative example where an ND filter is used, instead of the polarizer 70 used in the virtual image display device 1A according to Numerical Example 4. In the comparative example, the dimming rate of the ND filter is set to 57%.

As illustrated in these figures, as in Numerical Example 1, Numerical Examples 2 to 4 also demonstrate small illuminance unevenness in the image light and a small difference in the light-shielding ratio between the angles of view.

Table 3 presents the maximum illuminance of light that causes ghosting or flaring as a ratio to the illuminance of external light. More specifically, the ratio indicates the maximum illuminance of light that causes ghosting or flaring with respect to the illuminance of external light at an angle of view of 10 degrees reaching the eye EY of the wearer. In the present embodiment, the eye EY of the wearer is assumed to be $\varphi$3 mm. In Table 3, ND indicates the ratios for the comparative examples described in FIGS. 6, 8, 10, and 12, respectively.

Table 3

|  | EXAMPLE 1 | EXAMPLE 2 | EXAMPLE 3 | EXAMPLE 4 |
|---|---|---|---|---|
| PRESENT INVENTION | 7.74E-06 | 3.02E-06 | 1.27E-06 | 7.34E-06 |
| ND | 8.54E-01 | 5.27E-01 | 4.80E-01 | 9.64E-01 |

As described above, in Numerical Examples 1 to 4, the polarizer 70 is included in the virtual image display device 1A. This configuration reduces ghosting or flaring more than the comparative example, as presented in Table 3.

The above is a description of embodiments of the present disclosure. The embodiments of the present invention are not limited to those described above, and various modifications are possible within the scope of the technical idea of the present invention. For example, the embodiments of the present application also include contents obtained by appropriately combining the embodiments explicitly described in the specification or the obvious embodiments.

Aspects of the present disclosure are as follows.

Aspect 1

An optical system includes a light guide, a partial reflector, and a polarizer. The light guide guides image light emitted from an image display element that displays an image. The light guide has a light-emission surface; and an outer surface opposite to the light-emission surface. The partial reflector in the light guide to reflect a part of the image light guided in the light guide to an outside of the light guide through the light-emission surface. The polarizer is on the outer surface of the light guide to transmit a part of incident light incident on the polarizer. The polarizer has a first transmittance in a first polarization direction higher than a second transmittance in a second polarization direction orthogonal to the first polarization direction, with respect to vertical incident light incident perpendicularly on the polarizer. The partial reflector has a first reflectance in the first polarization direction lower than a second reflectance in the second polarization direction, with respect to the vertical incident light.

Aspect 2

In the optical system for the virtual image display device according to Aspect 1, formulae below are satisfied: $60 < TA \le 100$, $0 < TB < 30$. In the above formulae, TA indicates the first transmittance (%) in the first polarization direction with respect to the vertical incident light, and TB indicates the second transmittance (%) in the second polarization direction with respect to the vertical incident light.

Aspect 3

The optical system for the virtual image display device according to Aspect 1 or 2, further includes multiple partial reflectors including the partial reflector. The multiple partial reflectors are placed at intervals in an optical-axis direction of the optical system.

Aspect 4

In the optical system for the virtual image display device according to Aspect 3, a formula below is satisfied: 5 < $RB_{MIN}$ < 30. In the above formula, $RB_{MIN}$ indicates a lowest second reflectance (%) in the second polarization direction among second reflectances of the multiple partial reflectors in the second polarization direction.

Aspect 5

In the optical system for the virtual image display device according to Aspect 3 or 4, a formula below is satisfied: 0.1 < $RB_{MIN}$ / $RB_{MAX}$ < 0.4. In the above formula, $RB_{MIN}$ indicates a lowest second reflectance (%) in the second polarization direction among second reflectances of the multiple partial reflectors in the second polarization direction, and $RB_{MAX}$ indicates a highest second reflectance (%) in the second polarization direction among the second reflectances of the multiple partial reflectors in the second polarization direction.

Aspect 6

In the optical system for the virtual image display device according to any one of Aspects 3 to 5, a formula below is satisfied: 0 < $RA_{MAX}$ < 25. In the above formula, $RA_{MAX}$ indicates a highest first reflectance (%) in the first polarization direction among first reflectances of the multiple partial reflectors in the first polarization direction.

Aspect 7

The optical system for the virtual image display device according to any one of Aspects 1 to 6, further includes a dimmer to reduce light entering the light guide through the outer surface.

Aspect 8

The optical system for the virtual image display device according to any one of Aspects 1 to 7, further includes a reflector. The partial reflector is between a first area and a second area different from the first area in an optical-axis direction of the optical system. The partial reflector transmits a part of first image light guided in a first direction from the first area to the second area in the light guide; and reflects a part of second image light to exit outside the light guide through the outer surface, the second image light guided in a second direction opposite to the first direction, from the second area to the first area. The reflector is in the second area. The reflector reflects the first image light, which is transmitted through the partial reflector in the first direction, back to the partial reflector in the second direction as the second image light.

Aspect 9

The optical system for the virtual image display device according to Aspect 8, further includes a polarization converter to: rotate a first polarization of the first image light guided in the first direction and transmitted through the partial reflector; and rotate a second polarization of the second image light guided in the second direction, which has been reflected back from the reflector, to convert the first image light polarized in the first polarization direction during transmission through the partial reflector, into the second image light polarized in the second polarization direction.

Aspect 10

In the optical system for the virtual image display device according to any one of Aspects 1 to 9, a dimension of the light guide in a thickness direction is longer than a beam diameter of the image light guided in the light guide, the thickness direction being defined by a distance between the light-emission surface and the outside surface opposite to the light-emission surface, to guide the image light within the light guide without total internal reflection.

Aspect 11

A virtual image display device includes: the image display element; and the virtual image display device for the virtual image display device according to any one of Aspects 1 to 10.

Aspect 12

A head-mounted display includes the virtual image display device according to Aspect 11.

Thus, numerous additional modifications and variations are possible in light of the above teachings. For example, elements and/or features of different illustrative embodiments may be combined with each other and/or substituted for each other within the scope of the present invention.

**Claims**

1. An optical system (1B) comprising:

    a light guide (30) to guide image light emitted from an image display element that displays an image, the light guide (30) having:

        a light-emission surface (340); and
        an outer surface (350) opposite to the light-emission surface (340);

    a partial reflector (320) in the light guide to reflect a part of the image light guided in the light guide (30) to an outside of the light guide (30) through the light-emission surface (340); and
    a polarizer (70) on the outer surface (350) of the light guide to transmit a part of incident light incident on the polarizer (70), the polarizer (70) having a first transmittance in a first polarization direction higher than a second transmittance in a second polarization direction orthogonal to the first polarization direction, with respect to vertical incident light incident perpendicularly on the polarizer, and

    wherein the partial reflector (320) has a first reflectance in the first polarization direction lower than a second reflectance in the second polarization direction, with respect to the vertical incident light.

2. The optical system (1B) according to claim 1,

    wherein formulae below are satisfied:

$$60 < TA \leq 100$$

$$0 \leq TB < 30$$

    where:

        TA indicates the first transmittance (%) in the first polarization direction with respect to the vertical incident light, and
        TB indicates the second transmittance (%) in the second polarization direction with respect to the vertical incident light.

3. The optical system (1B) according to claim 1, further comprising multiple partial reflectors including the partial reflector (320),
    wherein the multiple partial reflectors are placed at intervals in an optical-axis direction of the optical system.

4. The optical system (1B) according to claim 3,

    wherein a formula below is satisfied:

$$5 < RB_{MIN} < 30$$

    where:
    $RB_{MIN}$ indicates a lowest second reflectance (%) in the second polarization direction among second reflectances of the multiple partial reflectors in the second polarization direction.

5. The optical system (1B) according to claim 3,

wherein a formula below is satisfied:

$$0.1 < RB_{MIN}/RB_{MAX} < 0.4$$

where:

RB_{MIN} indicates a lowest second reflectance (%) in the second polarization direction among second reflectances of the multiple partial reflectors in the second polarization direction, and
RB_{MAX} indicates a highest second reflectance (%) in the second polarization direction among the second reflectances of the multiple partial reflectors in the second polarization direction.

6. The optical system (1B) according to claim 3,

wherein a formula below is satisfied:

$$0 < RA_{MAX} < 25$$

where:
RA_{MAX} indicates a highest first reflectance (%) in the first polarization direction among first reflectances of the multiple partial reflectors in the first polarization direction.

7. The optical system (1B) according to claim 1, further comprising a dimmer to reduce light entering the light guide (30) through the outer surface (350).

8. The optical system (1B) according to claim 1, further comprising a reflector (50),

wherein the partial reflector (320) is between a first area and a second area different from the first area,
the partial reflector (320):

transmits a part of first image light guided in a first direction from the first area to the second area in the light guide (30); and
reflects a part of second image light to exit outside the light guide through the outer surface (350), the second image light guided in a second direction opposite to the first direction, from the second area to the first area, and

the reflector (50) in the second area reflects the first image light, which is transmitted through the partial reflector (320) in the first direction, back to the partial reflector (320) in the second direction as the second image light.

9. The optical system (1B) according to claim 8, further comprising a polarization converter (44) to:

rotate a first polarization of the first image light guided in the first direction and transmitted through the partial reflector (320); and
rotate a second polarization of the second image light guided in the second direction, which has been reflected back from the reflector (50), to convert the first image light polarized in the first polarization direction during transmission through the partial reflector, into the second image light polarized in the second polarization direction.

10. The optical system (1B) according to claim 1,
wherein a dimension of the light guide (30) in a thickness direction is longer than a beam diameter of the image light guided in the light guide (30), the thickness direction being defined by a distance between the light-emission surface (340) and the outside surface (350) opposite to the light-emission surface (340), to guide the image light within the light guide (30) without total internal reflection.

11. A virtual image display device (1A) comprising:

the image display element (10); and
the virtual image display device (1B) according to any one of claims 1 to 10.

12. A head-mounted display (1) comprising the virtual image display device (1A) according to claim 11.

# FIG. 1

# FIG. 2

# FIG. 3

FIG. 4A

# FIG. 4B

EP 4 411 453 A1

# FIG. 5

FIG. 6

# FIG. 7

# FIG. 8

EP 4 411 453 A1

FIG. 9

## FIG. 10

FIG. 11

# FIG. 12

EP 4 411 453 A1

# FIG. 13

350

320

Europäisches
Patentamt

European
Patent Office

Office européen
des brevets

# EUROPEAN SEARCH REPORT

**Application Number**

EP 24 15 4362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/091413 A1 (GRABARNIK SHIMON [IL] ET AL) 24 March 2022 (2022-03-24) | 1-3,6,8, 9,11,12 | INV. G02B27/01 |
| Y | * paragraphs [0108], [0101], [0114] - [0117], [0164] - [0165]; figures 12a,12b,29a,29b * | 2,4,5,7, 10 | ADD. G02B27/28 |
| | ----- | | |
| Y | US 2007/171329 A1 (FREEMAN MARK O [US] ET AL) 26 July 2007 (2007-07-26) * paragraphs [0078], [0079], [0083] * | 2,4,5 | |
| | ----- | | |
| Y | US 2015/277126 A1 (HIRANO TAKAAKI [JP] ET AL) 1 October 2015 (2015-10-01) * paragraph [0262]; figure 20 * | 7 | |
| | ----- | | |
| Y | US 2013/016292 A1 (MIAO XIAOYU [US] ET AL) 17 January 2013 (2013-01-17) * paragraph [0016]; figure 2 * | 10 | |
| | ----- | | |

| TECHNICAL FIELDS SEARCHED (IPC) |
|---|
| G02B |

The present search report has been drawn up for all claims

| Place of search | Date of completion of the search | Examiner |
|---|---|---|
| Munich | 18 June 2024 | Blau, Gerd |

EPO FORM 1503 03.82 (P04C01)

## ANNEX TO THE EUROPEAN SEARCH REPORT
## ON EUROPEAN PATENT APPLICATION NO.

EP 24 15 4362

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2024

| Patent document cited in search report | | Publication date | Patent family member(s) | | Publication date |
|---|---|---|---|---|---|
| US 2022091413 | A1 | 24-03-2022 | CN | 114730086 A | 08-07-2022 |
| | | | EP | 4042229 A1 | 17-08-2022 |
| | | | EP | 4336241 A2 | 13-03-2024 |
| | | | IL | 290710 A | 01-04-2022 |
| | | | JP | 2022554051 A | 28-12-2022 |
| | | | KR | 20220074893 A | 03-06-2022 |
| | | | TW | 202131053 A | 16-08-2021 |
| | | | US | 2022091413 A1 | 24-03-2022 |
| | | | WO | 2021079372 A1 | 29-04-2021 |
| US 2007171329 | A1 | 26-07-2007 | EP | 1952189 A2 | 06-08-2008 |
| | | | JP | 5226528 B2 | 03-07-2013 |
| | | | JP | 2009516862 A | 23-04-2009 |
| | | | US | 2007159673 A1 | 12-07-2007 |
| | | | US | 2007171328 A1 | 26-07-2007 |
| | | | US | 2007171329 A1 | 26-07-2007 |
| | | | US | 2010201953 A1 | 12-08-2010 |
| | | | US | 2010202034 A1 | 12-08-2010 |
| | | | WO | 2007062098 A2 | 31-05-2007 |
| US 2015277126 | A1 | 01-10-2015 | CN | 104950443 A | 30-09-2015 |
| | | | EP | 2924491 A1 | 30-09-2015 |
| | | | JP | 2015184560 A | 22-10-2015 |
| | | | US | 2015277126 A1 | 01-10-2015 |
| US 2013016292 | A1 | 17-01-2013 | CN | 103620479 A | 05-03-2014 |
| | | | EP | 2732328 A2 | 21-05-2014 |
| | | | KR | 20140031321 A | 12-03-2014 |
| | | | US | 2013016292 A1 | 17-01-2013 |
| | | | WO | 2013012484 A2 | 24-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006162767 A